# EUROPEAN PATENT APPLICATION

(11) **EP 0 529 170 A1**
(43) Date of publication of application: **03.03.1993**
(21) Application number: 91500069.9
(22) Date of filing: 25.06.1991
(51) Int. Cl.: A22C 15/00, B65G 65/00

(54) **Machine to load sausage pieces on seasoning carts**

(71) Applicant: EMUTIDOS TURON S.A., E-17178 Las Presas (Gerona) (ES)
(72) Inventor: Aguilar Pages, Pedro, Olot, Gerona (ES)
(74) Representative: Alonso Langle, Emilio

(57) **Abstract**

The machine comprises two carts, 1 and 2, being the cart (1) slave of the master cart (2), providing it by means of tilting forks (10) the load constituted by frames (12) from which the sausage pieces (13) are hung; the carts 1 and 2 move ascending and descending by columns 2 and 4 integrated in the frame (16) and in the semi-bed (18), forming both the structure (17), where there are guide-rails (22) for the seasoning cart (20), provided with supporting wings (21) for the frames (13); the cart (20) is inmobilized in the structure by retention means (24) and the skid (2) is raised above the upper level of the cart (20) to receive one by one the frames (12) that are provided by the slave skid; once the loading of skid 2 is completed, it descends, being liberated and placed at another level.

## Description

### OBJECT OF THE INVENTION

This invention is related to a machine to load sausage pieces on seasoning carts. Such carts are prepared with a plurality of levels and a rolling structure to allow their movement from the facilites where the sausage pieces are produced to the seasoning chambers, to follow there the conventional process to achieve their optimum consumption conditions.

### BACKGROUND OF THE INVENTION

For the moment, the loading of sausage pieces, at the facilities where the sausage meat is introduced into the tripes, on the rolling carts where the sausages stay hung during the seasoning phase in one or more chambers, has been carried out manually, employing abundant manpower and spending at least forty five minutes to load a six-level cart.

Most processes at a sausages facility are automatic, operating transfering pork meat, for example, from the mincers and mixers to other machines to insert it into tripes. Once the tripes are filled with sausage meat and mechanically tied at their ends, the pieces are hung from a bar forming a group with other pieces which number varies according to the size of the pieces.

The seasoning process starts inmediately once the filled and tied sausage piece is hung from the bar. This process must be carried out at specific and very critical conditions of temperature and humidity inside big seasoning chambers at low temperature and with continuous air renewal.

The bars with the sausage pieces are arranged on the carts supporting them between two lateral supporters acting as bolsters. Said carts surpass the two meters of height and are provided with supporting wings at different levels and consecuently determining the number of levels, and depending their total or partial use on the length of the sausage pieces, since between them must be kept an air pass to allow an homogeneous seasoning of every sausage piece during their seasoning process.

The carts are constituted by a metal structure provided with wheels in order to be easily moved, both mechanically and manually.

Once the sausage pieces are seasoned and ready for their consumption, they pass hung from their carts to the distribution store, being there mechanically ticketed and packed.

It is then evident that in middle of the process there is a part not carried out mechanically: the manual load of the carts. This part of the process requires at least the collaboration of two workers, taking the bars with the sausage pieces to put them on the different levels of the cart, being the upper level over two meters of height, while the lower level is under one meter.

As it has been previously said, it is necessary to spend at least forty five minutes to load a cart and there is consecuently a work day average production of aproximately ten carts. However, in the practice, humman fatigue lowers this performance to less than eight carts.

However, it is not the performance average the determining factor, but the working spycho-physical conditions. With 7 to 16 bars per level and 28 to 96 bars per cart, during all the workday the operators are squating and getting up.

According to the size of the pieces, each bar accepts 7 to 16 pieces, it means, that each level has a capacity of aproximately 49 to 256 pieces and, consequently, each cart admits a minimum of 4 x 49 pieces and a maximum of 6 x 256; it means that we are dealing with a production that oscillates between 4 x 49 x 8 carts, equal to 1,568 pieces per workday, and a maximum of small pieces of 6 x 256 x 8 carts, it means 12,288 pieces, being their total weight equivalent.

It is evident that the business of a sausage factory will become profitable only when its production is higher than the possible for a two-workers team.

A machine to load sausage pieces on seasoning carts is capable to load a maximum of 20 carts per workday, automatically, without any fatigue, being its production higher than the possible for a two-workers team. It is evident that the problem solved by the machine is important related to the human resources of the sausage factory, since it allows a re-distribution of these resources, a better planification of the production and a decrease in the direct costs of the workforce, making possible at the same time an accelerated depreciation of the investment and, consequently, lower selling prices.

A first attempt to simplify the described manual operation, trying to provide a mechanical support to lower the fatigue of the operators, was to arrange on the parallel blades of a lift truck, when the separation of the blades is adjustable, those bars to be loaded on a cart level.

Once those blades are loaded with the bars, and the bars loaded with the sausages, the blades are lift above the upper level of the cart, while the lift truck advances to enter into the cart. Once inside the cart, the blades are lowered until the bar ends are supported on the cart wings, getting out the blades to receive more bars.

This very simple operation gave an important initial solution. It brought a higher production with less effort and with a more enthusiastic human participation.

A first mechanization idea was to put a cart on parallel rails, centering a lift truck and adjusting the width of the arms, to finally inmobilize the lift truck in front of the cart.

With the arms staying at the waistline, two operators are able to load an appropiate number of bars with their correspondent sausages on the said arms, lifting the arms and pushing the cart by the rails to bring it near the lift truck in such a way to contain said arms. When the arms are lowered, the ends of the bars keep supported on the wings of each level, moving then the load out of the bars.

Pushing out the carts to liberate the arms loading them again allowed the starting of a new cycle, choosing again the number of sausage pieces per bar, the number of bars per level and the number of levels to load.

These semi-mechanization allowed to establish as valid the principle of introducing the arms into the cart to deposit the load.

A following technical advance was to eliminate the lift truck, establishing the arms into a fixed structure allowing the arms to be raised, introduced and lowered inside the cart.

Substantial modifications were necessary to avoid the separation and the centering of the cart: it was necessary to introduce the horizontal arms into the cart when they were exactly at their correspondent level; consequently, if the arms are loaded by the opposit part of the jail to allow the inmobilizing of this jail during the loading operation, it will be necessary to provide the arms with an horizontal moving system as well as a raising mechanism for the loaded bars to raise them to the arms level, starting the loading of the jail from the upper level of the cart.

The conveyers are the easiest way to move a loaded bar toward the arms or blades. If a milled conveyer and a step by step motor are used, it is then enough to divide the length of the arm or blade by the number of bars in order to know the length or development of each step.

If we introduce the appropriate data into an adequate computer program, then it would be possible to bring a step by step motor into operation when an advancing signal is received; any kind of sensor is able to detect when a bar has been loaded, bringing then the motors into operation for a step by step advance, while a step counter will stop the motors at the appropirate moment.

By mechanical means, it is also possible to put the bars in an elevator to raise the loaded bars up to the arms. These are the basis of the purpose of this invention.

### DESCRIPTION OF THE INVENTION

The machine proposed by the inventor is prepared to place the bars with the loaded sausage pieces into their correspondent cart level, placing the proper number of bars at each level and establishing the levels according to the size or length of the loaded pieces.

A microprocessor monitors the machine in order to give it the necessary selective and operative capacity. All the variables are introduced in the memory of the machine according to one or more programs in such a way that the machine is able to select the proper operation according to the type (size and weight) of the pieces to be loaded.

The microprocessor also incorporates an inhibitor cirtcuit that stops the automatic operation cycle at the end of the workday even when a cart is not totally loaded, in such a way that the product is inmediately transported to a cold chamber in order to mantain the biological conditions of the sausage, avoiding non-desired fenomenons that could negatively affect the product.

However, it is not the electronic monitoring the object of this invention, since it has conventional components and operative programs.

This machine, is fundamentaly defined because it consists of the combination of two skids, both of ascending and descending runs, being one of them slave to the other, the master skid.

The master skid incorporates two horizontal arms, each arm with two conveyers, advancing in the same direction, in a syncronized way and without any inertia.

The slave skid, also ascending and descending, incorporates the correspondent tilting forks, being their reception position always at the same height, while their ascending and decending runs are determined by the operating position of the horizontal arms.

Both skids describe their ascending and descending runs guided by columns, with pneumatic, hydraulic, electric or combined raising means.

The column guides are supported on a semi-parallelipedic structure, with an opening at the opposed face of the skids, allowing a passing for the seasoning cart placed into the structure, staying positioned and retained there.

Each seasoning cart is constituted by two sidebands and a bracing system; each sideband presents at the same level the correspondent opposed wings; such wings have the mission of retaining the frames from which the sausage pieces are hung. Outside the upper and lower bolsters, the cart, once placed in the loading structure, stays positioned and inmobilized in it. For this purpose, the structure has at level with the floor the correspondent guide laterals for the cart, which, as it has been before said, is conventionally rolled and, consequently, it is easy to introduce it at the upper position of the loading structure, being such loading structure provided with retention means for the cart, as for example the correspondent hydraulic or pneumatic, pistons.

The arms of the master cart pass upside down inside the cart, and they incorporate the correspondent sensors to determine their position in respect to the arms position and in respect to the cart wings, which are usually placed some centimeters above them.

On the other hand, the slave skid also incorporates a sensor in order to detect the position of the master cart.

The slave cart tilting forks always receive at the same loading level the frames from which the sausage pieces are hung, while a presence detector operates inmediately the skid raising means to achieve the proper level in respect to the master cart. The forks tilting means are activated at the end of the ascending run, and they advance in a curved and ascending run to place the bar, that constitutes the frame from which the sausage are hung, on the arms; the end of the run of the tilting forks is below the horizontal arms level, in such a way that before achieving this position, the frame has already been liberated on the said arms.

It has been specified that the arms are provided with their correspodent syncronized conveyers and, consequently, the frames loading the sausage pieces keep directly on the conveyers, being such conveyers of any conventional type, preferably electrically operated by means of an electro-motor monitored by a microprocessor in which program memory is registered the supporting wing length destined for the frames loading the sausage pieces. It is enough to introduce a program option and the microprocessor will establish the consecuent separation between the frames and the number of frames by level. In this way, the arm conveyers will go forward step by step each time they receive a frame loading sausage pieces, in such a way that, when the number of frames placed on the conveyers is the one determined by the microprocessor, the slave skid will stays non-operative while the master cart descends, allowing the frames with the sausage pieces to be supported in the seasoning cart wings.

The descending run of the master cart is extended until the moment when the sensor detects another loading level. The other level could be the inmediate lower one or any other one determined by the loading program.

With this selective purpose, the microprocessor operation program admits different options in such a way that each seasoning cart could be loaded in a particular way according to the production necessities.

The loading action starts at the upper level, and the horizontal arms are positioned over the level, in such a way that, once the upper level is saturated, it is proceeded to load the other lower levels. Afterwards, the complex stays in repose because the means that retain the cart to the loader are liberated.

### DESCRIPTION OF THE DRAWINGS

In order to illustrate the description and to help to a better understanding of the invention, attached to this description, and as an integral part of it, there is a set of drawings that, with an illustrative and non-limiting character, represent the following:
Figure 1 is a schematic view of the cart loader and the seasoning cart according to a specific embodiment.

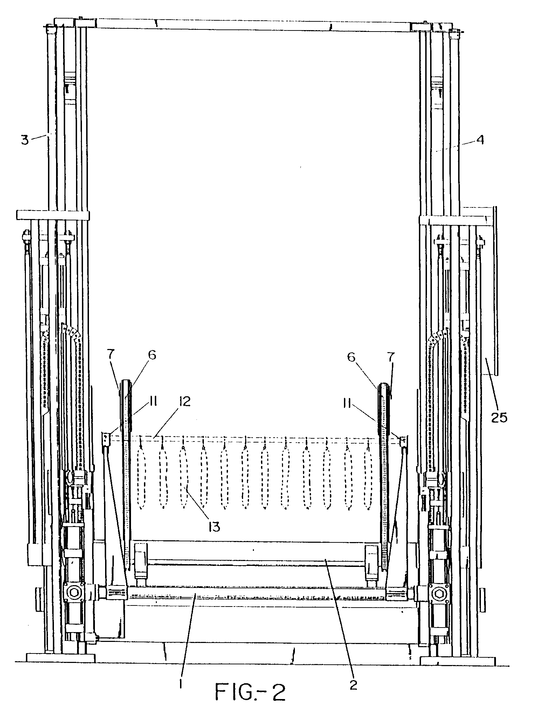

Figure 2 is a rear and elevated view of the cart loader according to figure 1.

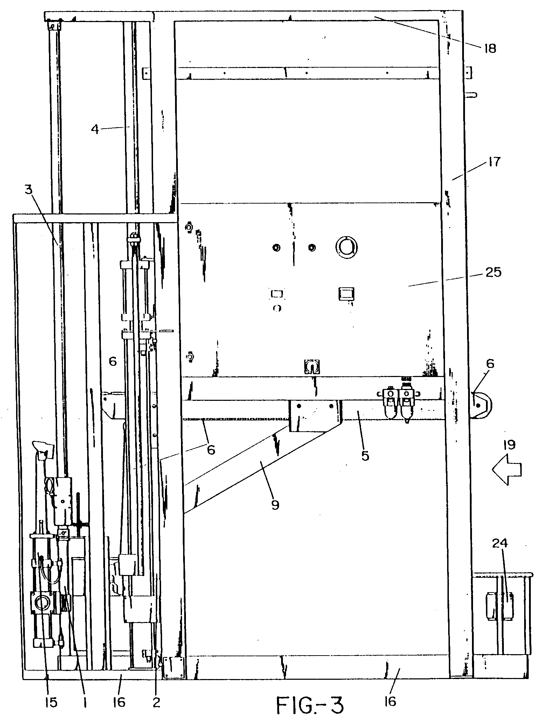

Figure 3 is a side elevated view of the cart loader according to figures 1 and 2.

### PREFERENT EMBODIMENT OF THE INVENTION

According to the drawings, the proposed machine consists of a combination of two skids (1 and 2), both with ascending and descending runs guided by guides (3 and 4). The cart (1) playing on guide (3) is slave of skid (2) or of the master skid playing on guide columns (4). The master skid (2) incorporates the correspodent horizontal arms (5), in each one being prepared with a conveyer (6); both conveyers (6) are syncronized and their step by step advance is determined by a microprocessor that control them. The technology of the microprocessor, its program and the variables introduced in to it, are not significative for the purpose of the invention. The number of advancing steps of a conveyer (6) advancing cycle is the result of dividing a constant -the length of the supporting guides of the cart- by the number of frames deposited on the guides, being the number of guides a variable to introduce in each cart loading admision level.

It is not necessary that the electro-motor operating the conveyer to be a step by step one. It will be enough to be a common motor coupled with an advance and direction sensor to control its advance and its direction.

In this way, the master skid (2) is a complex ascending and descending by the guide columns (4), which incorporates level sensors (7). The levels are indicated by the load receiving wings usually existing in the loader cart presently in use in this industry sector.

The horizontal arms (5) are placed on the correspondent gins (8) and rigidized by diagonal bracings (9).

The slave skid (1), playing in the guide column (3), has the correspondent forks (10) that tilt by mechanic, hydraulic or pneumatic operating means, with supporting ends (11) destined for the frames (12) from which the pieces (13) are hung.

In the case of the example, an hydraulic or pneumatic cylinder (14) acts as a raising mean for the master skid (2); cylinder (15) operates the slave skid (1).

The guide columns (3 and 4) are placed in a bed (16) which is integrated into a structure (17) provided with an upper semi-bed (18) that rigidize the complex, such complex offering a rear access indicated by an arrow (19), where the cart is introduced through (20).

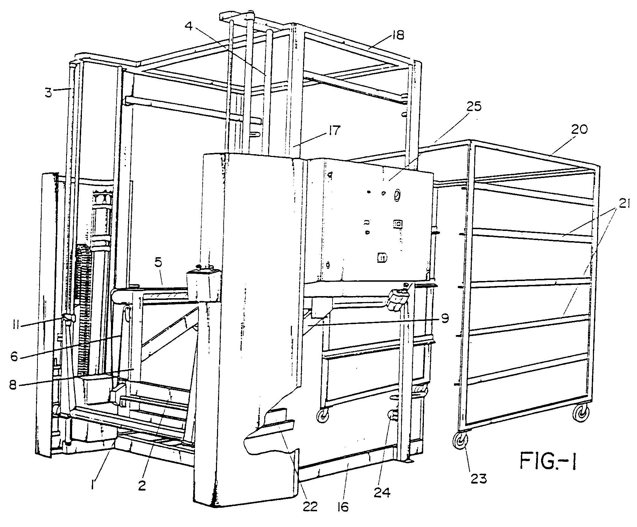

As it could be seen in the view of figure 1, the cart (20) is provided with lateral supporting wings (21) where the frames (12) loading the sausage pieces (13) are properly arranged, separated by the constant dividing action of the conveyer.

In the bed (16), it has been prepared the correspondent guide rails (22) for the wheels (23) of the cart (20), so when said cart (20) is properly placed, it stays aligned at the same level; it has been also prepared the correspondent retention means (24), constituted by persons or by pneumatic or hydraulic means to inmobilize the seasoning cart, acting automatically when the sensors, photoelectric cells, for example, note the presence of the cart (20).

According to what it has been described and in view of the figures, first of all we will introduce the empty cart inside the machine in order to be detected by represented sensors, proceeding to inmobilize the cart (20).

In an inmediate secuence, the master skid (2) it elevated automatically towards the upper level of the cart defined by the supporting wings (21) that will be detected by means of not represented sensors in order to keep situated the horizontal arms (5) aproximately three centimeters above the supporting wing level (21).

Simultaneously, and by the electronic means of the microprocessor installated in the monitor panel (25) of the machine and according to the introduced option, it will be decided the loading density, which could be modified at any loading level during the loading process of the cart (20).

The frames (12) loading the sausage pieces (13) will be arranged in the supporting terminals (11) of the forks (10); optical or mechanical frame detectors, not represented in the drawings, will activate the skid (1) which will move to surpass the height in which the skid (2) is placed with the arms (5), proceeding to tilt the forks to deposit the frame (12) with its load on the conveyer (6), located in the arms (5) which, according to the program option introduced, will go forward a step while the slave skid (1) will return to the starting point, taking a new charge and repeating the cycle until the saturation of the loading level.

When the loading level, according to what it has been prepared, is completed, the master skid will descend to find the lower level that could be or not the inmediate one, according to the loading variable introduced in the monitoring electronic system.

When the master skid (2) descends, the frames (12) with its load will keep retained in the supporting wings (21) of the carts (20).

When he master skid (2) detects that it is in the lowest level of the cart (20) and once the load is completed, it will stay in repose, liberating the level and the means of retention of the cart (20), being then possible to extract it in order to start a new loading cycle.

It is not considered necessary to make a wider description to allow to any skill in the art to understand the scope of the invention and the advantages derived from it.

A preferent embodiment of the invention has been disclosed, but of course, the same is subjected to a number of modifications and changes in the materials, shape, size and arrangement of the elements, whenever this does not altere the scope of the invention.

The terms used for this description must be taken in a wide and non limitative sense.

## Claims

1. A machine to load sausage pieces on a seasoning cart prepared to use conventional seasoning carts (20) that admit frames (12) from which the sausages pieces (13) are hung and incorporating, as a mean to deposit the frames (12) on the level determined by the supporting wings (21), the correspondent blades 5 that emerge from a master cart (2) that ascends and descends by vertical guides 4, characterized in that the arms or blades 5 of the master cart 2 have their correspondent conveyers operated by electro-micromotors monitored by conventional electronic means, such as a computer, to go forward step by steps, such steps with a lenght determined by the result of dividing the useful length of the supporting wing (21) of the cart (20) by the number of frames (12) to be put there, being the carts (1 and 2) arranged on guide column joined to a bed (16) and a semi-bed 18 that rigidize a structure (17) with an access between two side rails (22) acting as side-guides for the wheels (23) of the cart (20) which is mobilized by retention means (24) prepared in the strucure (17).

2. A machine to load sausage pieces on seasoning carts according to the first claim, characterized in that the master cart 2 is served by a slave cart 1 that moves towards the master cart tilting the correpondent forks 10 with supporting wings (11) and loading sensors that activate the monitoring and operating electronic means when a frame (12) loading the sausage piece (13) is detected, being the slave cart provided with an ascending movement to surpass the level of the arms (5) of the master cart 2, and with a constant descending movement to a new admission loading level.

3. A machine to load sausage pieces on a seasoning cart, according to the first and third claims, characterized in that the tilting forks (10) tilt towards the horizontal arms (5) of the master cart 2, raising the frame (12) above the said arms to finally deposit the frame on them.

4. A machine to load sausage pieces on a seasoning cart according to the first claim, characterized in that the tilting forks (10) of the slave skid operates inside the arms (5) of the slave skid and staying inside the area determined by the wings (12) of the seasoning cart.
